# EUROPEAN PATENT SPECIFICATION

(11) **EP 0 924 044 B1**
(45) Date of publication and mention of the grant of the patent: **10.04.2002**
(21) Application number: 98204359.8
(22) Date of filing: 21.12.1998
(51) Int. Cl.: B29C 45/00, B65D 25/32

(54) **Injection mold for manufacturing a bucket provided with a handle**
Spritzgiessform zur Herstellung eines Eimers mit einem Henkel
Moule d'injection pour la fabrication d'un seau pourvu d'une anse

(30) Priority: 19.12.1997 NL 1007859
(43) Date of publication of application: 23.06.1999
(73) Proprietor: Van Den Brink Development B.V., 6732 BJ Harskamp (NL)
(72) Inventor: van den Brink, Dirk Steven, 3771 AC Barneveld (NL); van den Brink, Anno Gerrit, 6732 BJ Harskamp (NL)
(74) Representative: Ottevangers, Sietse Ulbe

(56) References cited:
- EP-A- 0 308 679
- WO-A-98/22273
- DE-A- 2 405 193
- FR-A- 2 538 301
- GB-A- 2 168 238
- US-A- 3 443 005
- US-A- 3 861 840
- US-A- 4 125 246
- US-A- 4 579 709

## Description

The present invention relates to an injection mold for manufacturing a bucket which is provided with a handle according to the precharacterizing portion of claim 1 and 2.

Such a mold is known from US-A-4 125 246. In this mold for manufacturing a bucket the first and the second mold cavity are connected with each other through a an orifice 118. Further, the handle is provided with two handle bearings 120 in the form of a ring. Each handle bearing 120 is detachably connected to a bushing 116 having retaining ears 24. The bushing 116 has a central bore which is necessary to flex the retaining ears 24 inwardly when the mold part 104 forming the bushing 116 is retracted before opening the mold (see column 6, line 64 to column 7, line 11). The publication positively states that the plastic for forming the bail and the ring bearing may be supplied through another or additional paths (column 6, lines 58-60). However, the publication further states that the advantages in providing the common communication with cavity 30 for forming the various portion of a pail are substantial.

EP-A-0 660 792 describes a bucket which has the advantage that the manufacture thereof is particularly simple in that only the injection molding operation needs to be carried out and the bucket needs to be taken from the mold to obtain a finished bucket with handle.

The known bucket is manufactured with the aid of an injection mold which, for each bucket, is provided with a single mold cavity which comprises both the bucket and the handle. Accordingly, the molten plastic generally flows via the bottom of the bucket to the handle to form both the handle and the bucket. It is therefore inevitable in this method of manufacturing a bucket that the handle and the bucket are connected with each other through plastic bridges.

The drawback of the known bucket is that the handle and the bucket are always made from the same plastic. Accordingly, it is not possible to provide a known bucket with a handle of a different color and/or plastic than the bucket. When such a bucket is desired by the buyer, the manufacturer of the bucket must manufacture the bucket and the handle separately and subsequently carry out an assembly operation to attach the handle to the bucket. This has as a consequence that such buckets are considerably more costly than buckets in which the plastic and the color of the bucket and the handle are the same.

The object of the invention is to provide a solution to the problems outlined above. To that end, according to the invention, the injection mold is characterized by the features of claim 1 or 2.

With such an injection mold, as a consequence of the separate plastic supply channels, two kinds of plastic and/or colors can be simultaneously supplied to the mold, one plastic being used for forming the bucket and the other plastic for forming the handle of the bucket. Thus, in a single injection molding operation, both the bucket and the handle can be manufactured.

Assembly operations can be omitted with the injection mold because the first mold cavity is formed around the second mold cavity and/or vice versa, such that the handle of the bucket with handle formed with the injection mold is assembled on the bucket.

It is noted that U.S. patent US-A-3,861,840 discloses an apparatus and a method for manufacturing a bucket with handle, in which the mold comprises a first plastic supply channel and a second plastic supply channel. However, for each bucket, the mold comprises only a single mold cavity in which both the bucket itself and the handle thereof are molded. According to the known method, first the bucket portion is filled up with plastic by injection, while the supply of plastic to the handle is blocked. Thereafter, after the plastic of the bucket has cured, the temporary blockade in the mold cavity is removed, whereafter the plastic for the handle is supplied via the second plastic supply channel. This plastic flows into undercut openings in the bucket, already cured, so that a connection between the bucket and the handle is effected, without the bucket and the handle fusing with each other. Accordingly, in the case of the known mold, the production of a bucket takes much longer, since the bucket and the handle are molded after each other. Since, according to the invention, the injection mold comprises two completely separate mold cavities, the bucket and the handle can be manufactured simultaneously, so that in the same period of time virtually twice as many buckets can be produced.

It is further noted that U.S. patent US-A-3,443,005 discloses a method and an apparatus for manufacturing a box of a rectangular shape, which box is provided with two hinge stubs and with a lid which is provided with two pivot holes, through which reach the hinge stubs. The known box is manufactured by injection molding in an injection mold, which injection mold comprises two separate plastic supply channels, one for the box and one for the lid. The lid and the box can be molded simultaneously from different kinds of plastic. Although all claims of the patent in question clearly set forth that the mold cavity is separated by a "partition with a restricted orifice in said cavity which divides said cavity into individual cavities for each part of said plural part article, said cavities being interconnected", the publication also discloses complete separation of the molding cavities. Apart from that, the connection of the lid with the box is not at all undetachable. The flange 18 only needs to be moved slightly outwards to bring it beyond engagement with the hinge stub 16, so that the lid becomes detached from the box. Accordingly, there is no question of an undetachable connection. Furthermore, the publication does not relate at all to an injection mold for a bucket provided with a handle. The very time lapse between the publication of US-A-3,443,005 and the present invention shows that it cannot be obvious to those skilled in the art to use the teaching of US-A-3,443,005 for the purpose of manufacturing buckets which are provided with handles formed thereon. Even if the teaching disclosed in US-A-3,443,005 were applied to buckets, it is not a bucket according to the present invention that would be obtained. Firstly, because US-A-3,443,005 does not describe completely separated mold cavities - Fig. 5 clearly shows the mutual connection 44 between the lid and the box - and, secondly, because the hinge joint formed is not an undetachable hinge joint.

DE-A-2 405 193 discloses a bucket with a handle which is manufactured in a single injection mold. The mold only has a single mold cavity because the handle cavity and the bucket cavity are connected with each other so as to form slim material bridges. In view thereof, the material for the handle and the bucket are the same.

Further elaborations of the invention are described in the subclaims and will be further clarified hereinafter on the basis of two exemplary embodiments, with reference to the drawings.
Fig. 1 shows a partial top plan view of a first exemplary embodiment of a bucket with handle according to the invention;
Fig. 2 shows a partial cross-sectional/side view of the bucket represented in Fig. 1;
Fig. 3 shows a left side view of the bucket represented in Fig. 1;
Fig. 4 shows a cross-sectional view taken on line IV-IV in Fig. 2;
Fig. 5 shows a cross-sectional view taken on line V-V in Fig. 2;
Fig. 6 shows a top plan view of a second exemplary embodiment of a bucket according to the invention;
Fig. 7 shows a cross-sectional view of the connection between the bucket and the handle of the exemplary embodiment represented in Fig. 6; and
Fig. 8 shows a cross-sectional view of an injection mold intended for the manufacture of the bucket represented in Figs. 1-5.

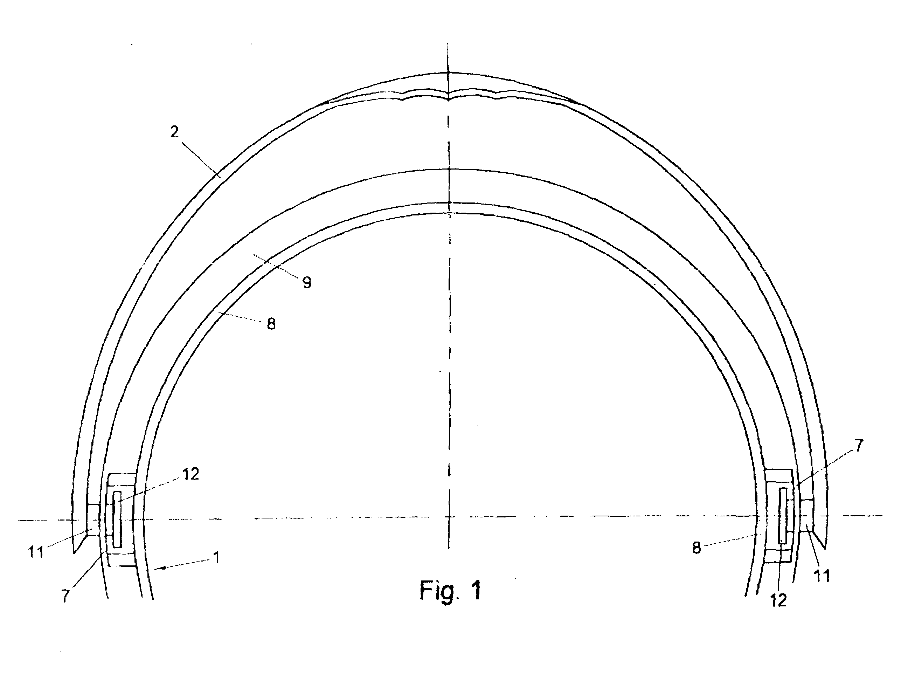

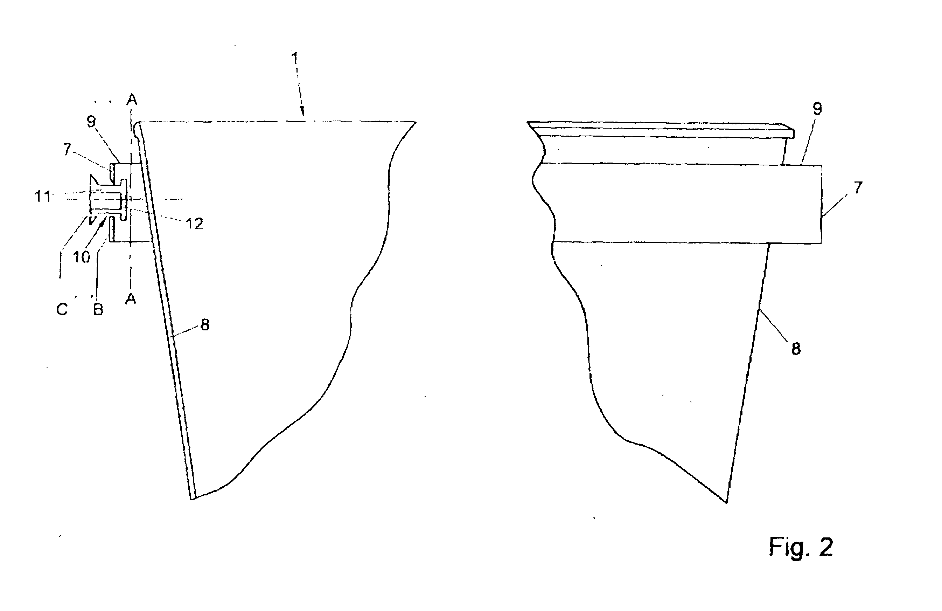

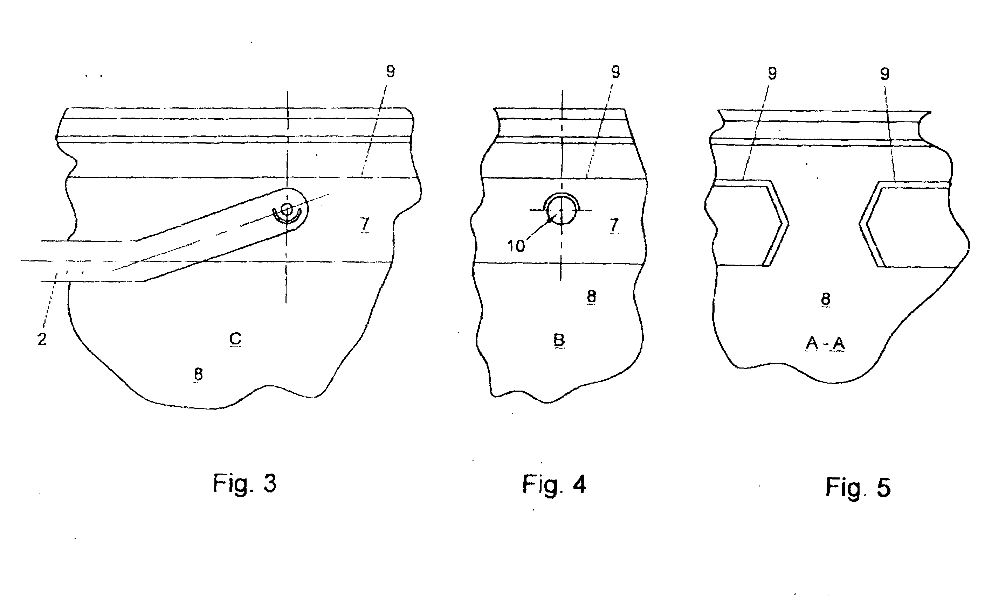

Figures 1-5 show portions of a first exemplary embodiment of a bucket 1 with handle 2. The bucket 1 has a substantially cylindrical shell wall 8 to which is connected, adjacent the upper end of the shell wall 8, a circumferential rib 9, which extends substantially perpendicularly to the shell wall 8. Connected with the end of the circumferential rib 9 remote from the shell wall 8 is a strengthening wall 7, which extends substantially parallel to, at some distance from, the substantially cylindrical shell wall 8 of the bucket 1. In the strengthening wall 7, two substantially diametrically opposite holes 10 are provided. The handle 2 is provided with two mutually facing handle projections 11, which reach through the holes 10. The mutually facing ends of the two projections 11 are provided with a thickening 12, formed thereon, whose circumferential contour is such that it cannot pass the associated hole 10. To fully clarify the connection between the handle 2 and the bucket 1, a side view and two different cross-sectional views of the connection are represented in Figs. 3-5, respectively.

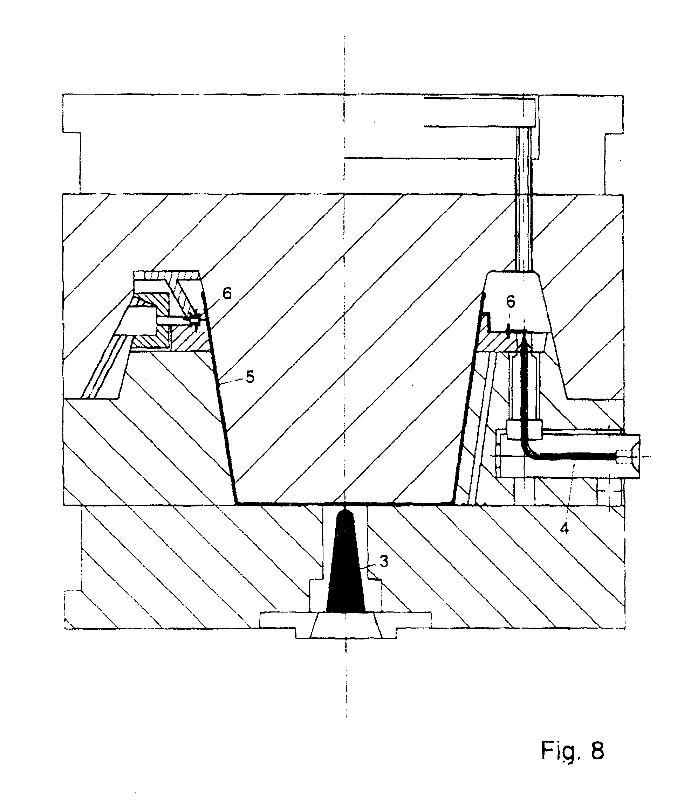

Both the handle 2 and the bucket 1 are formed in a single injection mold, represented in cross section in Fig. 8. To that end, the injection mold comprises two plastic supply channels 3, 4, which are each connectable to a separate injection unit of an injection molding machine, known per se. The first plastic supply channel 3 terminates in a first mold cavity 5, in the form of the bucket 1. The second plastic supply channel 4 terminates in a second mold cavity 6, in the form of the handle. Adjacent the mold parts forming the holes 10 in the strengthening wall 7, the first mold cavity 5 is configured around the second mold cavity 6 adjacent the projections 11, such that the handle 2 after the molding process is assembled on the bucket 1.

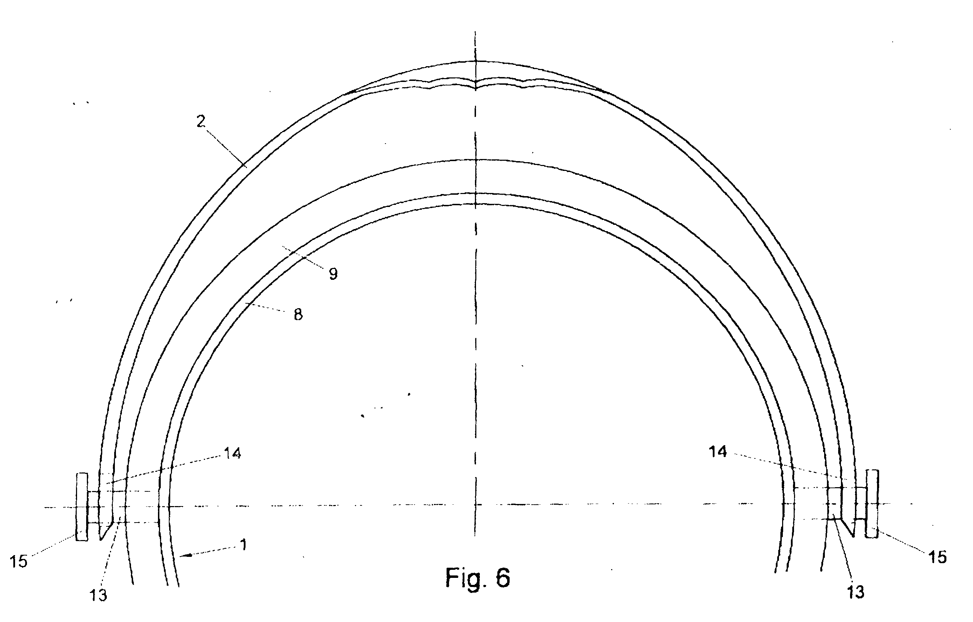

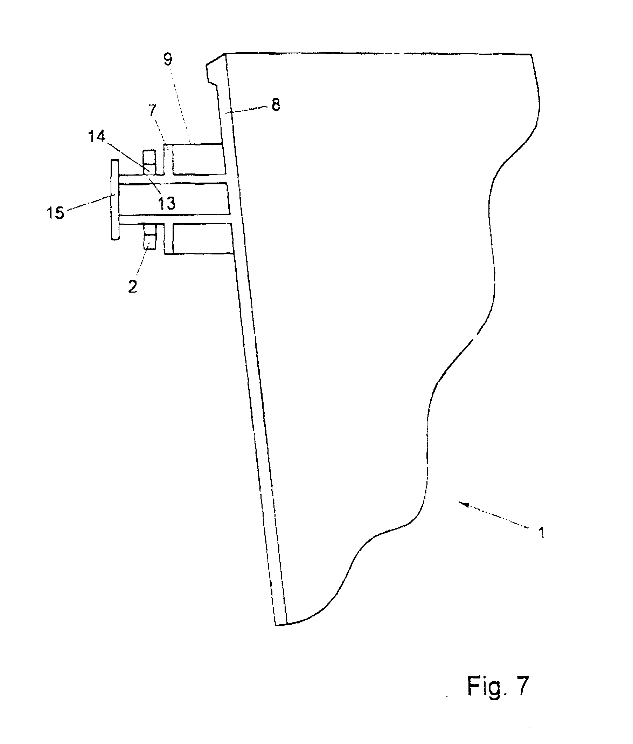

The injection mold with which the bucket of Figs. 1-5 is manufactured corresponds substantially with the injection mold with which the bucket of Figs. 6 and 7 is manufactured, except for a difference adjacent the connection between the handle 2 and the bucket 1. In the injection mold intended for manufacturing the bucket of Figs. 6 and 7, not the handle 2 but the bucket 1 is provided with two substantially diametrically opposite bucket projections 13. The second mold cavity 6, with which the handle 2 is molded, is designed such that the handle 2, after being molded, is provided with two handle holes 14. The bucket projections 13 referred to reach through the handle holes 14. At their mutually remote ends, the bucket projections 13 are provided with a thickening 15, formed thereon, whose circumferential contour is such that it cannot pass the associated handle hole 14. In the injection mold for forming this bucket, the second mold cavity 6 adjacent the handle holes 14 will surround the first mold cavity 5 adjacent the bucket projections 13, such that after the bucket is removed from the injection mold, the handle 2 and the bucket 1 are undetachably connected with each other.

For forming a bucket a first injector and a second injector of an injection molding machine, known per se, will be connected to the first and the second supply channel 3, 4 of the injection mold. Thereafter, in a single process operation, using the first and the second injector, the plastic for the bucket 1 and the plastic for the handle 2 are substantially simultaneously supplied to the first plastic supply channel 3 and the second plastic supply channel 4, respectively. After a given solidification time, the injection mold is opened, so that the finished bucket 1 with the handle 2 formed thereon can be taken from the injection mold. Thereafter, the injection mold is closed again and a next bucket 1 with a handle 2 formed thereon can be manufactured. The great advantage of the above-described injection mold and the associated method for manufacturing a bucket with handle is that the plastic of the handle can possess other properties than the plastic of the bucket 1. As a consequence, for instance the handle 2 can have a different color than the bucket 1.

## Claims

1. An injection mold for manufacturing a bucket (1) which is provided with a handle (2), the injection mold comprising at least a first and a second plastic supply channel (3, 4), the first plastic supply channel (3) terminating in a first mold cavity (5) in the form of the bucket (1), while the second plastic supply channel (4) terminates in a second mold cavity (6) in the form of the handle (2) the first mold cavity (5) being designed such that the bucket (1) formed therefrom is provided with a strengthening wall (7), which extends substantially parallel to, at some distance from, the substantially cylindrical shell wall (8) of the bucket (1), and is connected with this shell wall (8) via at least one circumferential rib (9) extending substantially perpendicularly to the shell wall the first and the second plastic supply channel (3, 4) being each connectable to a separate injection unit, **characterized in that**, the first and the second mold cavities (5, 6) are completely separate from each other, the first mold cavity (5) being shaped around the second mold cavity (6), such that the handle (2) of the bucket with handle molded with the injection mold is undetachably connected with the bucket (1), the strengthening wall (7) being provided with two substantially diametrically opposite holes (10), the second mold cavity (6) being designed and positioned with respect to the first mold cavity (5), such that the handle (2) obtained therefrom is provided with two mutually facing handle projections (11), which reach through said holes (10), while the mutually facing free ends of the two projections (11) are provided with a thickening (12), formed thereon, whose circumferential contour is such that it cannot pass the associated hole (10).

2. An injection mold for manufacturing a bucket (1) which is provided with a handle (2), the injection mold comprising at least a first and a second plastic supply channel (3, 4), the first plastic supply channel (3) terminating in a first mold cavity (5) in the form of the bucket (1), while the second plastic supply channel (4) terminates in a second mold cavity (6) in the form of the handle (2), the first mold cavity (5) being designed such that the bucket (1) formed therefrom is provided with a strengthening wall (7), which extends substantially parallel to, at some distance from, the substantially cylindrical shell wall (8) of the bucket (1), and is connected with this shell wall (8) via at least one circumferential rib (9) extending substantially perpendicularly to the shell wall (8), while on the strengthening wall (7) and/or on the shell wall (8) two substantially diametrically opposite bucket projections (13) are provided, the second mold cavity (6) being designed and positioned with respect to the first mold cavity (5), such that the handle (2) obtained therefrom is provided with handle holes (14), through which reach said bucket projections (13), the first and the second plastic supply channel (3, 4) being each connectable to a separate injection unit, **characterized in that**, the first and the second mold cavities (5, 6), are completely separate from each other, the second mold cavity (6) being shaped around the first mold cavity (5), such that the handle (2) of the bucket with handle molded with the injection mold is undetachably connected with the bucket (1), the mutually remote free ends of the two bucket projections (13) being provided with a thickening (15), formed thereon, whose circumferential contour is such that it cannot pass the associated handle hole (14).

## Patentansprüche

1. Spritzgießform zur Herstellung eines mit einem Griff (2) versehenen Eimers (1), wobei die Spritzgießform wenigstens einen ersten und einen zweiten Kunststoffzuführkanal (3,4) aufweist, wobei der erste Kunststoffzuführkanal (3) in einem ersten Formhohlraum (5) in Form des Eimers (1) endet, während der zweite Kunststoffzuführkanal (4) in einem zweiten Formhohlraum (6) in Form des Griffs (2) endet, wobei der erste Formhohlraum (5) derart ausgebildet ist, daß der darin gebildete Eimer mit einer Verstärkungswand (7) versehen ist, die sich mit gewissem Abstand im wesentlichen parallel zur im wesentlichen zylindrischen Mantelwand (8) des Eimers (1) erstreckt und mit der Mantelwand (8) über wenigstens eine Umfangsrippe (9) verbunden ist, die sich im wesentlichen senkrecht zur Mantelwand erstreckt, wobei der erste und der zweite Kunststoffzuführkanal (3, 4) jeweils mit einer separaten Spritzeinheit verbindbar sind, **dadurch gekennzeichnet, daß** der erste und derzwelte Formhohlraum (5, 6) vollständig voneinander getrennt sind, wobei der erste Formhohlraum (5) um den zweiten Formhohlraum (6) herum geformt ist, so daß der Griff (2) des mit einem Griff in der Spritzgießform geformten Eimers unlösbar mit dem Eimer (1) verbunden ist, wobei die Verstärkungswand (7) mit zwei im wesentlichen diametral gegenüberliegenden Löchern (10) versehen ist, wobei der zweite Formhohlraum (6) derart ausgebildet und in bezug auf den ersten Formhohlraum (5) positioniert ist, daß der so erhaltene Griff (2) mit zwei einander zugewandten Griffvorsprüngen (11) versehen ist, welche sich durch die Löcher (10) erstrecken, während die einander zugewandten freien Enden der beiden Vorsprünge (11) mit einer daran ausgebildeten Verdickung (12) versehen sind, deren Umfangskontur derart ausgebildet ist, daß sie nicht das zugehörige Loch (10) passieren kann.

2. Spritzgießform zur Herstellung eines mit einem Griff (2) versehenen Eimers (1), wobei die Spritzgießform wenigstens einen ersten und einen zweiten Kunststoffzuführkanal (3, 4) aufweist, wobei der erste Kunststoffzuführkanal (3) in einem ersten Formhohlraum (5) in Form des Eimers (1) endet, während der zweite Kunststoffzuführkanal (4) in einem zweiten Formhohlraum (6) in Form des Griffs (2) endet, wobei der erste Formhohlraum (5) derart ausgebildet ist, daß der darin gebildete Eimer mit einer Verstärkungswand (7) versehen ist, die sich mit gewissem Abstand im wesentlichen parallel zur im wesentlichen zylindrischen Mantelwand (8) des Eimers (1) erstreckt und mit der Mantelwand (8) über wenigstens eine Umfangsrippe (9) verbunden ist, die sich im wesentlichen senkrecht zur Mantelwand erstreckt, wobei auf der Verstärkungswand (8) und/oder der Mantelwand (8) zwei im wesentlichen diametral gegenüberliegende Eimervorsprünge (13) vorgesehen sind, wobei der zweite Formhohlraum (6) derart ausgebildet und in bezug auf den ersten Formhohlraum (5) angeordnet ist, daß der derart erhaltene Griff (2) mit Grifflöchern (14) versehen ist, durch welche sich die Eimervorsprünge (13) erstrecken, wobei der erste und der zweite Kunststoffzuführkanal (3, 4) jeweils mit einer separaten Spritzeinheit verbind bar sind, **dadurch gekennzeichnet, daß** der erste und der zweite Formhohlraum (5, 6) vollständig voneinander getrennt sind, wobei der erste Formhohlraum (5) um den zweiten Formhohlraum (6) herum geformt ist, so daß der Griff (2) des mit einem Griff in der Spritzgießform geformten Eimers unlösbar mit dem Eimer (1) verbunden ist, wobei die voneinander entfernten freien Enden der belden Eimervorsprünge (13) mit einer daran ausgebildeten Verdickung (15) versehen sind, deren Umfangskontur derart ausgebildet ist, daß sie nicht das zugehörige Loch (14) passieren kann.

## Revendications

1. Moule d'injection pour la fabrication d'un seau (1) qui est muni d'une anse (2), le moule d'injection comprenant au moins des premier et second canaux d'alimentation en matière plastique (3, 4), le premier canal d'alimentation en matière plastique (3) se terminant dans une première cavité de moule (5) sous la forme du seau (1), tandis que le second canal d'alimentation en matière plastique (4) se termine dans une seconde cavité de moule (6) sous la forme de l'anse (2), la première cavité de moule (5) étant conçue de telle sorte que le seau (1) formé à partir de celle-ci est muni d'une paroi de renfort (7), qui s'étend sensiblement parallèlement à, à une certaine distance de, la paroi du corps (8) sensiblement cylindrique du seau (1), et est relié à cette paroi du corps (8) via au moins une nervure périphérique (9) s'étendant sensiblement perpendiculairement à la paroi du corps, les premier et second canaux d'alimentation de matière plastique (3, 4) pouvant être chacun reliés à une unité d'injection séparée, **caractérisé en ce que** les première et seconde cavités des moules (5, 6) sont complètement séparées l'une de l'autre, la première cavité de moule (5) étant conformée autour de la seconde cavité de moule (6), de telle sorte que l'anse (2) du seau avec l'anse moulée avec le moule d'injection est reliée, de façon inamovible, au seau (1), la paroi de renfort (7) étant munie de deux trous sensiblement diamétralement opposés (10), la seconde cavité de moule (6) étant conçue et positionnée par rapport à la première cavité de moule (5), de sorte que l'anse (2) obtenue à partir de celle-ci est munie de deux saillies d'anse se faisant face mutuellement (11), qui s'étendent à travers lesdits trous (10), tandis que les extrémités libres se faisant face mutuellement des deux saillies (11) sont pourvues d'un épaississement (12), formé sur elles, dont le contour périphérique est tel qu'il ne peut pas passer le trou associé (10).

2. Moule d'injection pour la fabrication d'un seau (1) qui est muni d'une anse (2), le moule d'injection comprenant au moins des premier et second canaux d'alimentation de matière plastique (3, 4), le premier canal d'alimentation de matière plastique (3) se terminant dans une première cavité de moule (5) sous la forme du seau (1), tandis que le second canal d'alimentation de matière plastique (4) se termine dans une seconde cavité de moule (6) sous la forme de l'anse (2), la première cavité de moule (5) étant conçue de telle sorte que le seau (1) formé à partir de celle-ci est muni d'une paroi de renfort (7), qui s'étend sensiblement parallèlement à, à une certaine distance de, la paroi de corps (8) sensiblement cylindrique du seau (1), et est relié à cette paroi de corps (8) via au moins une nervure périphérique (9) s'étendant sensiblement perpendiculairement à la paroi de corps (8), tandis que sur la paroi de renfort (7) et/ou sur la paroi de corps (8), deux saillies de seau sensiblement diamétralement opposées (13) sont prévues, la seconde cavité de moule (6) étant conçue et positionnée par rapport à la première cavité de moule (5), de sorte que l'anse (2) obtenue à partir de celle-ci est munie de trous d'anse (14) à travers lesquels lesdites saillies de seau (13) s'étendent, les premier et second canaux d'alimentation de matière plastique (3, 4) pouvant être chacun reliés à une unité d'injection séparée,
**caractérisé en ce que** les première et seconde cavités des moules (5, 6) sont complètement séparées l'une de l'autre, la seconde cavité de moule (6) étant conformée autour de la première cavité de moule (5), de sorte que l'anse (2) du seau avec l'anse moulée avec le moule d'injection est reliée, de façon inamovible, au seau (1), les extrémités libres mutuellement éloignées des deux saillies de seau (13) étant pourvues d'un épaississement (15), formé sur elles, dont le contour périphérique est tel qu'il ne peut passer le trou d'anse associé (14).
